# FASCICULE DE BREVET EUROPEEN

(11) **EP 1 860 313 B1**
(45) Date de publication et mention de la délivrance du brevet: **22.03.2017**
(21) Numéro de dépôt: 07290655.5
(22) Date de dépôt: 22.05.2007
(51) Int. Cl.: F02K 1/82, F02K 1/04, F02K 1/08, F02K 1/44

(54) **Corps central pour canal d'échappement d'un turboréacteur**
Zentraler Körper für Auslasskanal eines Turbinentriebwerks
Central body for the exhaust channel of a jet engine

(30) Priorité: 23.05.2006 FR 0604615
(43) Date de publication de la demande: 28.11.2007
(73) Titulaire: Safran Aircraft Engines, 75015 Paris (FR)
(72) Inventeur: Vincent, Thomas Alain Christian, 91120 Palaiseau (FR)
(74) Mandataire: Gevers & Orès

(56) Documents cités:
- EP-A- 1 391 597
- US-A1- 4 064 961
- US-A1- 4 137 992
- US-A1- 5 184 455
- US-A1- 2003 141 144
- US-A1- 2005 103 018

## Description

L'invention concerne le domaine de la réduction du bruit en sortie d'un turboréacteur.

Un turboréacteur comprend, d'amont en aval dans le sens de l'écoulement des gaz, une soufflante, un ou plusieurs étages de compresseurs, une chambre de combustion, un ou plusieurs étages de turbines et une tuyère d'échappement des gaz. Les gaz du flux primaire du turboréacteur, c'est-à-dire le flux de gaz en sortie des étages de turbine et en provenance de la chambre de combustion, s'échappent par le canal d'échappement des gaz terminé par une tuyère. Les gaz de flux secondaire sont éjectés soit séparément du flux primaire, soit mélangés au flux primaire.

Le canal d'échappement comporte généralement un carter externe, qui délimite l'enveloppe externe de la veine de gaz du flux d'échappement, ainsi qu'un carter interne, qui délimite l'enveloppe interne de la veine de gaz du flux d'échappement, pour favoriser son écoulement. Le carter interne forme un corps central du canal d'échappement et se présente sous la forme d'une paroi présentant une surface de révolution, qui peut être cylindrique, conique ou plus généralement de forme aérodynamique adaptée au flux, à symétrie de révolution autour de l'axe du turboréacteur. L'homme du métier désigne ce corps central du canal d'échappement aussi par sa dénomination anglaise, à savoir, "plug". On parlera dans la suite du corps central.

On note que la paroi du corps central du canal d'échappement peut également ne pas être à symétrie de révolution, pour des motifs de réduction du bruit du jet de gaz ou de réduction de la signature infrarouge ; le corps central peut présenter dans ce cas une section transversale ondulée, rectangulaire ou elliptique, par exemple. La présente invention s'applique particulièrement bien à un corps central avec une paroi à symétrie de révolution - ce qui est généralement le cas dans les applications civiles - mais s'applique également à un corps central qui n'est pas à symétrie de révolution.

Le corps central remplit, dans certains turboréacteurs, une autre fonction, qui est de guider le flux de dégazage du turboréacteur. Il est en effet prévu, sur certains turboréacteurs, à l'extrémité aval de son arbre central, un orifice de dégazage, par lequel s'échappent dans l'atmosphère divers fluides tels que de la vapeur d'huile, certains gaz de refroidissement, etc. On parle généralement de déshuileur. Dans ce cas, soit un tuyau de guidage du flux de dégazage s'étend au sein du corps central jusqu'à son extrémité, pour un guidage canalisé du flux de dégazage, soit aucun tuyau n'est prévu, le corps central assurant, par sa surface interne, le guidage du flux de dégazage. Le dégazage se fait généralement par aspiration, la pression au sein du tuyau ou du corps central étant inférieure à la pression dans le flux moteur.

Un problème constant des fabricants de moteurs est la réduction du bruit, notamment par souci du confort des passagers et des habitants des zones survolées par les avions. Il convient donc d'atténuer le bruit, notamment le bruit dans la tuyère, qui se compose du bruit généré dans la chambre de combustion, ou bruit de combustion, qui est à basses fréquences, et du bruit généré dans les turbines à haute et basse pression, ou bruit de turbine, qui est à plus hautes fréquences. Avec les revêtements acoustiques passifs connus, c'est-à-dire les dispositifs dont la géométrie est figée, l'atténuation du bruit de combustion à basses fréquences ne peut être obtenue avec le carter externe du canal d'échappement, car le volume à cet endroit n'est pas suffisant. C'est donc le bruit de turbine à plus hautes fréquences qui peut être traité sur ce carter, par exemple à l'aide d'une mince couche d'un matériau conformé en nids d'abeilles. Le problème se pose donc de l'atténuation du bruit de combustion à basses fréquences.

On connaît, par le document US 5, 592, 813, l'utilisation d'un corps central d'atténuation du bruit de combustion, comportant deux surfaces concentriques entre lesquelles sont ménagés des matériaux en nids d'abeilles, sur une épaisseur importante. On connaît en outre, par le document EP 1, 391, 597, l'utilisation d'un corps central formé de deux cônes, d'atténuation du bruit, le cône externe étant perforé et des cavités étant ménagées entre les deux cônes sous les perforations. Ces cavités forment en quelque sorte des nids d'abeilles de grandes dimensions, filtrant mieux les bruits basses fréquences. Chaque ensemble d'une cavité et d'une pluralité de trous forme un résonateur de Helmholtz, permettant d'atténuer les fréquences acoustiques, de manière bien connue de l'homme du métier. Il en va de même pour les nids d'abeilles, à plus petite échelle, mais sur une grande épaisseur.

Les deux solutions présentées procurent de bons résultats en atténuation du bruit. Elles sont toutefois très coûteuses, en prix et en masse, à mettre en place. Il est presque impossible - et donc cher - de plier des tôles conformées en nids d'abeilles, tandis que la mise en place de plus grandes cavités s'avère fastidieuse et de poids conséquent.

Par ailleurs, la tenue mécanique de l'ensemble peut être altérée par des problèmes de dilatation différentielle entre les différents éléments.

La présente invention vise à proposer un dispositif d'atténuation du bruit basses fréquences du moteur, qui soit moins coûteux et moins lourd, et donc plus facile à industrialiser. Les basses fréquences s'entendent typiquement de fréquences globalement comprises entre 500 et 1000 Hz.

A cet effet, l'invention concerne un corps central pour canal d'échappement des gaz d'un turboréacteur, comportant une paroi externe et au moins une paroi interne formant au moins une cavité entre elles, la paroi externe comportant une pluralité d'orifices percés sur au moins une portion amont, de manière à former au moins un résonateur de Helmholtz avec la cavité, caractérisé par le fait que la paroi interne comprend un manchon souple.

L'utilisation d'un manchon souple permet de minimiser la masse et donc d'obtenir un corps central assurant une atténuation acoustique à bas coût. L'industrialisation est aisée et la tenue mécanique assurée, dans la mesure où le manchon souple absorbe les différentiels de dilatation entre les parois externe et interne.

De préférence, la paroi interne est constituée d'un manchon souple.

Dans une forme de réalisation avantageuse, le manchon est formé d'un textile de fibres céramiques, de préférence à base de silice ou à base de basalte, avec un fil de couture pouvant être par exemple à base silice ou à base métallique.

Avantageusement toujours, le manchon est imperméable à l'air.

Selon une première forme de réalisation, le manchon est fixé à chacune de ses extrémités pour former une cavité unique, formant avec les orifices un unique résonateur de Helmholtz.

Selon une deuxième forme de réalisation, le corps central comporte une pluralité de manchons formant une pluralité de cavités formant une pluralité de résonateurs de Helmholtz.

Selon une troisième forme de réalisation, le corps central comporte un unique manchon avec au moins trois zones annulaires de fixation, formant une pluralité de cavités formant une pluralité de résonateurs de Helmholtz.

L'invention concerne également un turboréacteur, comportant un canal d'échappement de flux primaire avec le corps central décrit ci-dessus.

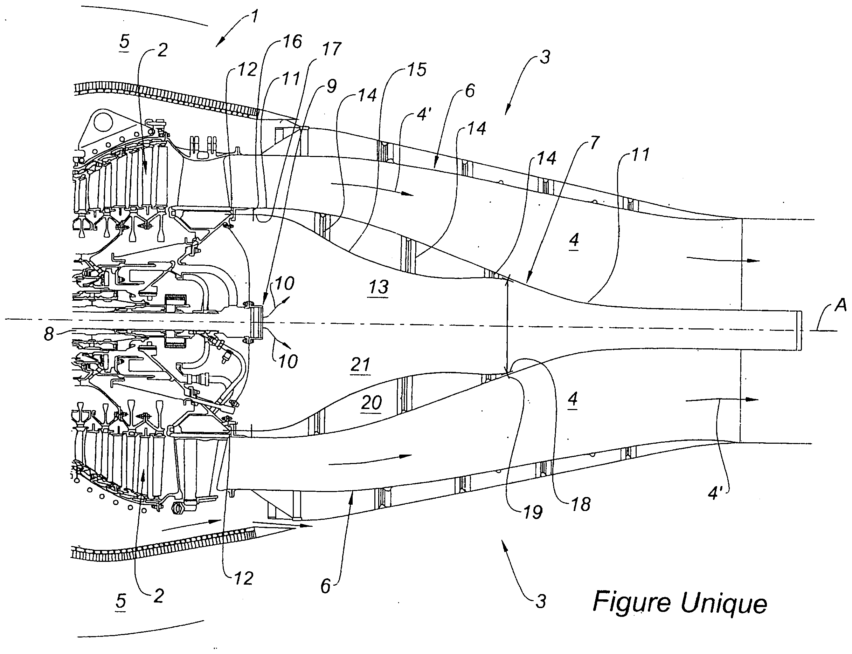

L'invention sera mieux comprise à l'aide de la description détaillée suivante de la forme de réalisation préférée de l'invention, en référence à la figure unique annexée, qui représente une vue en coupe schématique d'un turboréacteur avec le corps central de l'invention.

Le turboréacteur 1 présenté est un turboréacteur à double flux, les deux flux étant séparés. Il comprend, d'amont en aval dans le sens de l'écoulement des gaz, une soufflante, un compresseur basse pression, un compresseur haute pression, une chambre de combustion, une turbine haute pression, une turbine basse pression 2 et un canal d'échappement 3 des gaz. L'air est aspiré dans le turboréacteur par la soufflante et se divise, en aval de la soufflante puis tout au long du turboréacteur, en un flux primaire 4 et un flux secondaire. Le flux primaire 4 passe dans les compresseurs, la chambre de combustion et les turbines pour s'échapper par le canal d'échappement et la tuyère centrale. Le flux secondaire 5, en provenance directe de la soufflante, s'échappe à la périphérie de la tuyère centrale, en amont de celle-ci, guidé depuis la soufflante par la nacelle du turboréacteur. Le flux secondaire 5 fournit une part importante de la poussée du moteur.

Le canal d'échappement 3 comporte un carter externe 6, dont la surface interne délimite l'enveloppe externe de la veine du flux primaire dans le canal d'échappement 3, et un carter interne 7, ou corps central 7, dont la surface externe délimite l'enveloppe interne de la veine du flux primaire dans le canal d'échappement 3, de manière connue de l'homme du métier. Le flux primaire 4 est ainsi guidé entre les carters interne 7 et externe 6, comme on le voit schématiquement par les flèches 4'.

Le rotor basse pression, comportant notamment les compresseur et turbine basse pression, comporte un arbre 8. Dans le turboréacteur ici décrit, un déshuileur 9 est ménagé à l'extrémité aval de l'arbre 8 du rotor basse pression. Comme schématisé par les flèches 10, de la vapeur d'huile, divers gaz de refroidissement, etc., s'échappent par le déshuileur, par aspiration, comme il sera vu plus loin ; il s'agit du flux de dégazage 10.

Le corps central 7 comporte une paroi externe 11, qui est une paroi métallique, de préférence d'épaisseur constante. Cette paroi externe 11 dans cet exemple est une paroi de révolution, c'est-à-dire qu'elle est à symétrie de révolution autour de l'axe A du turboréacteur. Elle est de forme semblable à celle des corps centraux de l'art antérieur, à savoir, une forme aérodynamique guidant le flux primaire 4. En l'espèce, d'amont en aval, la paroi externe 11 est successivement de forme cylindrique, tronconique avec un diamètre se réduisant vers l'aval, puis cylindrique de nouveau, de diamètre inférieur à la partie amont. Ces formes s'enchaînent de manière continue et curviligne. La paroi externe 11 est fixée, du côté amont, à la structure fixe 12 du turboréacteur 1, dans le prolongement d'une paroi délimitant l'enveloppe interne de la veine primaire 4 émergeant de la turbine basse pression 2. A titre d'exemple, l'épaisseur de cette paroi externe 11 peut être de 1 mm.

La paroi 11 définit une cavité 13, que l'on nommera cavité globale 13 car elle correspond au volume global délimité par la paroi externe 11 du corps central 7. Cette cavité 13 est creuse, c'est-à-dire qu'il n'est pas prévu de couches de matériaux en nids d'abeille ou autre pluralité de cavités de résonance comme dans l'art antérieur, pour l'atténuation du bruit.

De préférence, il est prévu des moyens raidisseurs 14 qui participent à la tenue mécanique du corps central 7. Ces moyens raidisseurs 14 se présentent ici sous la forme de nervures circonférentielles ménagées sur la surface interne de la paroi externe 11 du corps central 7. Ils sont au nombre de trois sur la figure.

La paroi externe 11 du corps central 7 est percée d'une pluralité d'orifices, sur une portion amont de sa surface, de manière non visible sur la figure du fait de leur faible diamètre. Ces orifices débouchent donc, d'une part, dans le flux primaire du turboréacteur 1, d'autre part, dans la cavité 13 du corps central 7. La géométrie et le placement des orifices sont déterminés par calculs, en fonction de divers paramètres acoustiques. Il n'y a pas de règle générale et l'homme du métier les adaptera à ses contraintes et objectifs. En l'espèce, des orifices sont percés régulièrement sur une portion amont de la paroi 11, qui s'étend jusqu'au deuxième moyen raidisseur 14. Ces orifices sont tous ici de diamètre identique, répartis uniformément et placés en quinconce. Typiquement, pour un corps central 7 dont le diamètre de la portion cylindrique amont est de l'ordre de 60 à 70 cm, les orifices présentent un diamètre de 0,5 à 1,5 mm.

Le corps central 7 comporte par ailleurs une paroi interne 15, qui s'étend à l'intérieur de la paroi externe de révolution 11 délimitant la cavité globale 13. La paroi interne 15 se présente sous la forme d'un manchon souple, ou d'une "chaussette", ouvert des deux côtés. Dans la forme de réalisation préférée de l'invention, la paroi interne 15 est intégralement constituée d'un tel manchon souple.

Ce manchon souple 15 est avantageusement formé par un textile de fibres céramiques, de préférence à base de silice ou à base de basalte, avec un fil de couture pouvant être par exemple à base silice ou à base métallique. En l'espèce, le textile utilisé est un tissu en fibres céramiques semblable à ceux que l'on utilise comme gaine de joint pour les portes des fours industriels ou comme gaine de protection pare-feu dans l'industrie aéronautique. Un tel tissu est résistant à hautes températures (il résiste à des températures supérieures à 1000°C). A titre d'exemple, on peut utiliser le tissu commercialisé sous la marque déposée Nextel-3M.

Le manchon 15 est fixé, en amont et en aval, le long de zones annulaires au niveau de ses extrémités. Le manchon 15 est fixé, en amont, au niveau de la structure fixe 12 du turboréacteur 1. La fixation est opérée de manière très simple, par rivetage 16 du textile le long d'un cerclage métallique 17 solidaire de la paroi externe 11 du corps central 7. Il en va de même du côté aval, où le manchon 15 est fixé à un cerclage 18, solidaire de la paroi externe 11 du corps central 7, par des rivets 19. Tous ces éléments, bien connus, sont représentés de manière schématique.

Le manchon 15 délimite ainsi une cavité externe 20, qui s'étend entre la paroi externe 11 et le manchon 15, et une cavité interne 21, correspondant au reste de la cavité globale 13 délimitée par la paroi externe 11 du corps central 7, c'est-à-dire correspondant au volume interne du manchon 15.

La cavité externe 20 forme une cavité 20 de résonance, dont la fonction est d'atténuer les bruits basses fréquences dans la tuyère, notamment le bruit de combustion, en coopération avec les orifices percés dans la paroi externe 11 du corps central 7, orifices qui débouchent, d'une part, dans cette cavité 20 de résonance, d'autre part, dans le flux de gaz primaire. Les orifices forment avec la cavité 20 de résonance un résonateur de Helmholtz, avec ici une cavité 20 de résonance unique, commune pour tous les orifices.

L'efficacité d'un tel résonateur de Helmholtz, avec une cavité 20 de résonance unique pour une pluralité d'orifices, est moindre que celle d'une pluralité de résonateurs de Helmholtz, comprenant une cavité distincte pour chaque orifice. Toutefois, un tel corps central 7 selon l'invention est simple à mettre en place, donc à faible coût, et présente une masse faible. Il s'agit donc d'un compromis entre, d'une part, une efficacité acceptable quant à l'atténuation du bruit, d'autre part, un coût et une masse raisonnables.

La présence du manchon souple 15, formant la paroi interne de la cavité 20 de résonance, permet de régler le volume de cette cavité 20 de résonance, en fonction des fréquences que l'on souhaite atténuer.

Ainsi, le volume de la cavité 20 de résonance est réglé par la tension qui est imposée au manchon 15. Ce dernier, dans le cas où il est peu tendu, va prendre une forme avec un profil courbe plus ou moins prononcé, entre ses extrémités annulaires de fixation et donc ménager un plus grand espace avec la paroi externe que s'il est plus tendu (c'est-à-dire si la paroi du manchon 15 est plus tendue entre ses extrémités de fixation).

Il convient de veiller à ce que le manchon 15, qui est souple, ne vienne pas se plaquer contre la paroi externe 11 en fonctionnement. Pour ce faire, il faut que la pression statique au sein de la cavité interne 21, que l'on notera P₂₁, soit inférieure à la pression statique dans la cavité externe 20, que l'on notera P₂₀.

Dans le cas où le corps central 7 se prolonge en aval de la tuyère 3 et est ouvert à son extrémité aval, la pression statique de la cavité interne 21 est égale à la pression atmosphérique, que l'on notera Pₐₜₘ, c'est-à-dire, P₂₁ = Pₐₜₘ. Par ailleurs, du fait des orifices percés dans la paroi externe 11, la pression statique de la cavité externe 20 est égale à la pression statique du flux de gaz primaire 4 à cet endroit, que l'on notera P_{flux}, c'est-à-dire, P₂₀ = P_{flux}. La condition énoncée au paragraphe précédent pour que le manchon 15 ne vienne pas se plaquer contre la paroi externe 11 s'écrit :
P₂₁ < P₂₀, c'est-à-dire Pₐₜₘ < P_{flux}, ce qui est toujours vrai dans le cas d'un corps central 7 ouvert en aval de la tuyère.

Par ailleurs, une telle relation, non seulement évite le placage du manchon 15 contre la paroi externe 11, mais encore permet son maintien en forme. Il est donc bien possible, comme énoncé plus haut, de prévoir un manchon 15 relativement lâche, c'est-à-dire peu tendu entre ses extrémités annulaires de fixation. Dans ce cas, du fait du différentiel de pression entre la cavité externe 20 et la cavité interne 21, le manchon 15 est maintenu dans une forme concave.

Du fait de l'utilisation d'un manchon souple 15 pour former la paroi intérieure du corps central 7, les différences de dilatation thermique sont absorbées par ce manchon 15, en particulier si ce dernier est monté volontairement lâche (non tendu).

On a présenté l'invention en relation avec un manchon 15 formant une cavité externe 20 annulaire unique, commune à tous les orifices percés sur la paroi externe 11, ladite cavité externe 20 unique formant avec les orifices un unique résonateur de Helmholtz.

Selon une autre forme de réalisation non représentée, le corps central 7 comporte une pluralité de manchons 15, fixés en aval les uns des autres pour former une pluralité de cavités externes annulaires de résonance formant une pluralité de résonateurs de Helmholtz. Autrement dit, un premier manchon est fixé entre deux zones de fixation, la zone de fixation amont d'un deuxième manchon est fixée juste en aval de la zone de fixation aval du premier manchon, etc. Chaque manchon forme donc une cavité de résonance pour les orifices percés dans la zone de la paroi externe 11 située entre les deux extrémités annulaires de fixation du manchon.

Selon une autre forme de réalisation non représentée, un unique manchon est fixé à la paroi externe 11 du corps central 7, et comporte au moins trois zones annulaires de fixation à cette paroi 11, constituant une pluralité de cavités de résonance 20 formant une pluralité de résonateurs de Helmholtz. On obtient une géométrie similaire à la forme de réalisation précédente, à la différence que la pluralité de cavités de résonance est obtenue à l'aide d'un unique manchon. Ce manchon est donc en quelque sorte fixé en accordéon sur la paroi externe.

On note que l'invention s'applique particulièrement bien au cas où le corps central 7 est ouvert de son côté aval. L'invention s'applique également à un corps central fermé, mais à partir d'une certaine altitude, la pression statique du flux primaire P_{flux} est inférieure à la pression statique de la cavité interne P₂₁, cette dernière restant égale à la pression statique au sol, c'est-à-dire 1 bar. Il convient donc de prendre ceci en compte, car alors le manchon 15 se plaque contre la paroi externe 11.

Tout ce qui précède concernant les pressions s'applique à la condition que le manchon 15 soit imperméable à l'air.

Par ailleurs, selon une forme de réalisation particulière, le manchon 15 assure, par sa surface interne, une fonction de guidage pour le flux de dégazage 10 débouchant du déshuileur 9. Comme le manchon 15 n'est pas percé d'orifices et est imperméable à l'air, il permet de conserver une pression statique P₂₁ dans la cavité interne 21 inférieure à la pression dans l'enceinte du turboréacteur 1, ce qui permet au flux de dégazage d'être aspiré dans la cavité interne 21.

Dans le cas où le manchon 15 forme une cavité externe 20 unique, l'étendue longitudinale de la portion amont de la paroi externe 11 qui est percée d'orifices est déterminée par calculs, à partir d'une loi de pression statique au sein de la cavité 20 de résonance. En effet, le flux de gaz primaire 4 a tendance à re-circuler dans la cavité 20 de résonance, c'est-à-dire à rentrer par un orifice amont et à ressortir par un orifice aval. Moins la portion de paroi percée d'orifices est étendue longitudinalement, moins ce phénomène est important. La détermination de l'abscisse longitudinale, sur la paroi 11 du corps central 7, à partir de laquelle il n'y a plus d'orifices, est ainsi déterminée en fonction du seuil de tolérance, que l'homme du métier se fixe, pour cette re-circulation de gaz. Incidemment, si ce seuil de tolérance n'est pas trop exigent cette portion amont pourrait s'entendre de toute la portion de la paroi externe 11 qui est au droit de la paroi interne 15, c'est-à-dire la portion qui forme la paroi externe de la cavité 20 de résonance. Dans le cas d'espèce présenté, la limite a été fixée environ à la deuxième nervure formant moyen raidisseur 14. Les calculs peuvent être faits en deux ou trois dimensions, selon le degré de précision requis ; ils permettent de calculer la répartition (loi) de pression statique en paroi en fonction de l'évolution de la section et du nombre de Mach dans le flux de gaz primaire 4.

## Revendications

1. Corps central pour canal d'échappement des gaz d'un turboréacteur, comportant une paroi externe (11) et au moins une paroi interne (15) formant au moins une cavité (20) entre elles, la paroi externe (11) comportant une pluralité d'orifices percés sur au moins une portion amont, de manière à former au moins un résonateur de Helmholtz avec la cavité (20), **caractérisé par le fait que** la paroi interne comprend un manchon souple (15).

2. Corps central selon la revendication 1, dans lequel la paroi interne est constituée d'un manchon souple (15).

3. Corps central selon l'une des revendications 1 et 2, dans lequel le manchon (15) est formé d'un textile de fibres céramiques, de préférence à base de silice ou à base de basalte, avec un fil de couture pouvant être par exemple à base silice ou à base métallique.

4. Corps central selon l'une des revendications 1 à 3, dans lequel le manchon (15) est imperméable à l'air.

5. Corps central selon l'une des revendications 1 à 4, dans lequel le manchon (15) est fixé à chacune de ses extrémités pour former une cavité unique (20), formant avec les orifices un unique résonateur de Helmholtz.

6. Corps central selon l'une des revendications 1 à 4, comprenant une pluralité de manchons (15) formant une pluralité de cavités (20) formant une pluralité de résonateurs de Helmholtz.

7. Corps central selon l'une des revendications 1 à 4, comprenant un unique manchon (15) avec au moins trois zones annulaires de fixation, formant une pluralité de cavités (20) formant une pluralité de résonateurs de Helmholtz.

8. Turboréacteur, comportant un canal d'échappement de flux primaire avec un corps central selon l'une des revendications 1 à 7.

## Patentansprüche

1. Zentraler Körper für einen Auslasskanal der Gase eines Turbotriebwerks, umfassend eine Außenwand (11) und mindestens eine Innenwand (15), die zwischen sich mindestens einen Hohlraum (20) bilden, wobei die Außenwand (11) mehrere Öffnungen aufweist, die an mindestens einem vorgelagerten Abschnitt derart gebohrt sind, um mindestens einen Helmholtz-Resonator mit dem Hohlraum (20) zu bilden, **dadurch gekennzeichnet, dass** die Innenwand eine flexible Hülse (15) aufweist.

2. Zentraler Körper nach Anspruch 1, wobei die Innenwand aus einer flexiblen Hülse (15) gebildet ist.

3. Zentraler Körper nach einem der Ansprüche 1 und 2, wobei die Hülse (15) aus einem Textil aus Keramikfasern, vorzugsweise auf der Basis von Siliziumoxid oder auf der Basis von Basalt, mit einem Nähfaden, der beispielsweise auf der Basis von Siliziumoxid oder auf Metallbasis sein kann, gebildet ist.

4. Zentraler Körper nach einem der Ansprüche 1 bis 3, wobei die Hülse (15) luftundurchlässig ist.

5. Zentraler Körper nach einem der Ansprüche 1 bis 4, wobei die Hülse (15) an jedem ihrer Enden befestigt ist, um einen einzigen Hohlraum (20) zu bilden, der mit den Öffnungen einen einzigen Helmholtz-Resonator bildet.

6. Zentraler Körper nach einem der Ansprüche 1 bis 4, umfassend mehrere Hülsen (15), die mehrere Hohlräume (20) bilden, die mehrere Helmholtz-Resonatoren bilden.

7. Zentraler Körper nach einem der Ansprüche 1 bis 4, umfassend eine einzige Hülse (15) mit mindestens drei ringförmigen Befestigungsbereichen, die mehrere Hohlräume (20) bilden, die mehrere Helmholtz-Resonatoren bilden.

8. Turbotriebwerk, umfassend einen Auslasskanal eines Primärstroms mit einem zentralen Körper nach einem der Ansprüche 1 bis 7.

## Claims

1. A central body for a gas escape channel of a turbojet engine, comprising an external wall (11) and at least one internal wall (15) forming at least on cavity (20) between them, the external wall (11) comprising multiple orifices drilled on at least one upstream section, in a way to form at least one Helmholtz resonator with the cavity (20), **characterised in that** the internal wall includes a flexible sleeve (15).

2. A central body according to Claim 1, wherein the internal wall is constituted of a flexible sleeve (15).

3. A central body according to any one of Claims 1 and 2, wherein the sleeve (15) is formed of a ceramic fibre textile, preferably silicon-based or basalt-based, with a thread which could be, for example, silicon-based or metal-based.

4. A central body according to any one of Claims 1 to 3, wherein the sleeve (15) is airtight.

5. A central body according to any one of Claims 1 to 4, wherein the sleeve (15) is fixed to each one of its ends to form a single cavity (20), forming one single Helmholtz resonator with the orifices.

6. A central body according to any one of Claims 1 to 4, including multiple sleeves (15), forming multiple cavities (20), forming multiple Helmholtz resonators.

7. A central body according to any one of Claims 1 to 4, including one single sleeve (15) with at least three annular fixing areas, forming multiple cavities (20), forming multiple Helmholtz resonators.

8. A turbojet engine, comprising a primary flow escape channel with a central body according to any one of Claims 1 to 7.
